# EUROPÄISCHE PATENTSCHRIFT

(11) **EP 2 277 653 B1**
(45) Veröffentlichungstag und Bekanntmachung des Hinweises auf die Patenterteilung: **26.06.2013**
(21) Anmeldenummer: 10007350.1
(22) Anmeldetag: 15.07.2010
(51) Int. Cl.: B23K 7/10

(54) **Verfahren zur Bestimmung des Abstands zwischen einer autogenen Brennereinrichtung und einem Werkstück durch Erfassung einer Kerngrösse ohne eine eigene elektrische Energieversorgung**
Method of determining the distance between an autogenous burner device and a workpiece through measuring an electric parameter without providing a proper electric energy supply
Procédé de détermination de l'écart entre un dispositif de brûleur autogène et une pièce par mesure d'un paramètre électrique sans employer une source d'énergie supplémentaire

(30) Priorität: 16.07.2009 DE 102009033556
(43) Veröffentlichungstag der Anmeldung: 26.01.2011
(73) Patentinhaber: Kjellberg-Stiftung, 03238 Finsterwalde (DE)
(72) Erfinder: Bach, Friedrich-Wilhelm, Prof. Dr.-Ing., 30916 Isernhagen (DE); Hassel, Thomas, 30419 Hannover (DE); Bierbaum, Marten, 30451 Hannover (DE); Krink, Volker, 03238 Finsterwalde (DE)
(74) Vertreter: Pfenning, Meinig & Partner GbR

(56) Entgegenhaltungen:
- DE-B- 1 220 356
- JP-A- 59 016 668
- US-A- 3 668 018
- US-A- 4 363 468

## Beschreibung

Die Erfindung betrifft ein Verfahren zur Bestimmung des Abstands zwischen einer autogenen Brennereinrichtung und einem Werkstück gemäß dem Oberbegriff des Anspruchs 1 (siehe, z.B., DE 1 220 356). Sie kann besonders vorteilhaft für eine Regelung dieses Abstandes während des Prozesses zum thermischen Trennen genutzt werden.

Eine autogene Brennereinrichtung findet beim autogenen thermischen Trennen und Fügen von Werkstoffen Verwendung. Für das Fügen wird im Rahmen des Autogenschweißens üblicherweise ein Schweißbrenner als Brennereinrichtung verwendet. Eine vergleichbare Brennereinrichtung kann auch zum thermischen Trennen, d. h. zum Brennschneiden, von Materialen verwendet werden. Im Vergleich zu anderen Schneideverfahren erlaubt das autogene Brennschneiden das Trennen sehr großer und insbesondere sehr dicker Werkstücke, beispielsweise von Metallblechen mit Dicken über 50 mm, mit einer im Vergleich zu anderen Verfahren höheren Schneidgeschwindigkeit.

Für ein präzises Trennen oder Fügen von Werkstücken ist bei der Autogentechnik die Einhaltung eines bestimmten Abstands zwischen der Brennereinrichtung und dem Werkstück von Bedeutung, da die von der Brennereinrichtung erzeugte Flamme eine charakteristische Temperaturverteilung aufweist und der Trenn- oder Fügevorgang am besten im Bereich des Temperaturmaximums dieser Temperaturverteilung durchzuführen ist. Zur Bestimmung und Einstellung des Abstands bei einer Brennschneidemaschine ist aus der DE 101 44 718 A1 bekannt, eine gesonderte Sensoreinrichtung an der Brennereinrichtung anzubringen, über die mittels kapazitiver oder induktiver Messung der Abstand zu einem Werkstück bestimmt wird.

Bei Verwendung einer derartigen Sensoreinrichtung kommt es vor, dass insbesondere bei Werkstücken mit unregelmäßiger Oberfläche Kollisionen der Sensoreinrichtung oder der Brennereinrichtung mit dem Werkstück auftreten. Zudem ist eine separate Sensoreinrichtung aufwendig und teuer und relativ unpraktisch in der Handhabung.

In DE 1962170 C ist ein Verfahren zum Steuern des Vorschubes einer automatischen Gasschneidevorrichtung beschrieben, bei der als Messgröße das zwischen der Düse und dem Werkstück auftretende Potential benutzt werden soll. Es wird darin aber ausgesagt, dass diese elektrische Messgröße einmal unabhängig von der Gaszusammensetzung und dem Abstand der Düse zum Werkstück ist, so dass eine Abstandsmessung in dieser Form nicht möglich ist.

Das US 2,364,645 betrifft eine technische Lösung, die beim autogenen thermischen Trennen eingesetzt werden kann. Dabei ist die Düse eines Brenners Bestandteil einer elektrischen Schaltung, mit der eine Abstandsregelung der Düse zum Werkstück erreicht werden soll. Dabei soll ein elektrischer Strom aktiv durch die Brennerflamme zwischen Brenner und Werkstück fließen. Für die Regelung soll die sich entsprechend verändernde elektrische Leitfähigkeit in der Brennerflamme genutzt werden. Für den aktiven Betrieb ist eine elektrische Stromquelle, hier im Konkreten eine Batterie, erforderlich. Im Übrigen ist die elektrische Schaltung aufwändig ausgeführt. Die bei der Regelung des Abstandes zu berücksichtigende Zeitkonstante ist daher groß und die Genauigkeit begrenzt.

Die DE 27 24 909 A1 wiederum betrifft ein Verfahren zur automatischen Führung eines Gas-Schneidbrenners zum Auffinden der Anschneidkante. Es soll hierfür der Widerstand der Schneidflamme zwischen dem Brenner und dem Werkstück in einer Messschaltung erfasst werden. Die durch das Auftreffen der Schneidflamme auf die Werkstückkante auftretende Widerstandsänderung soll für das Startsignal zum Beginn der Vorwärmphase mit sich daran anschließender Schneidphase genutzt werden. Dabei soll die große Differenz des sich beim Auftreffen der Schneidflamme ändernden elektrischen Widerstands ausgenutzt werden. Der elektrische Widerstand ändert sich dabei von einem Ausgangswert von mehreren 100 kOhm um 1 bis 3 Zehnerpotenzen nach unten, was einen signifikanten Unterschied darstellt, der für diese Art von Steuerung einfach und sicher ausgenutzt werden kann.

DD 282802 A7 und die DD 249 598 A1 betreffen Verfahren zur Regelung des Brennerabstandes bzw. zur Prozesskontrolle beim thermischen Trennen. Dabei soll bei der aus DD 249 598 A3 bekannten Technik, mit sehr hohem Aufwand ein elektrischer Wechselstrom mit hoher Frequenz durch die Brennerflamme geführt und dabei die positive und die negative Halbwelle unterhalb der Sättigungsstromstärke im Gasplasma erfasst und gespeichert werden. Diese Werte sollen mit Vorgabewerten verglichen und für die Regelung genutzt werden. Bei der in DD 282 802 A7 beschriebenen Lehre soll periodisch eine Folge von mindestens 11 zeitlich kurzen, größenmäßig verschiedenen, positiven Konstantgleichströmen durch das Gasplasma geleitet werden. Dabei werden die Spannungsabfälle gespeichert und gemessen. Außerdem soll der mittlere Anstieg des linearen Teils der Kennlinie und der Knickstrom mit Grenzwerten verglichen und mit Prozesssteuergrößen verknüpft werden. Auch hierfür ist ein hoher Aufwand erforderlich, obwohl eine große Zeitkonstante in Kauf genommen werden muss.

Der Erfindung liegt die Aufgabe zu Grunde, Möglichkeiten zur Bestimmung des Abstands zwischen einer autogenen Brennereinrichtung und einem Werkstück aufzuzeigen, die eine effiziente Abstandsbestimmung mit einfachen Mitteln und kleiner Zeitkonstante für eine Regelung des Abstandes ermöglichen.

Diese Aufgabe wird durch das in dem Patentanspruch 1 angegebene Verfahren gelöst. Die Unteransprüche geben vorteilhafte Weiterbildungen der Erfindung an.

Die Erfindung beruht auf der Erkenntnis, dass das zur thermischen Bearbeitung in der Autogentechnik verwendete, verbrennende Gasgemisch, insbesondere die Brennerflamme, für die Bestimmung des Abstandes zwischen einer Brennereinrichtung und einem Werkstück genutzt werden kann. Dies hat den Vorteil, dass die Abstandsmessung relativ präzise erfolgen kann, nämlich in Bezug auf die Position der Brennerflamme selbst. Hierdurch können Messungenauigkeiten, die durch eine im Abstand von der Brennerflamme angeordnete separate Sensoreinrichtung hervorgerufen werden, vermieden werden.

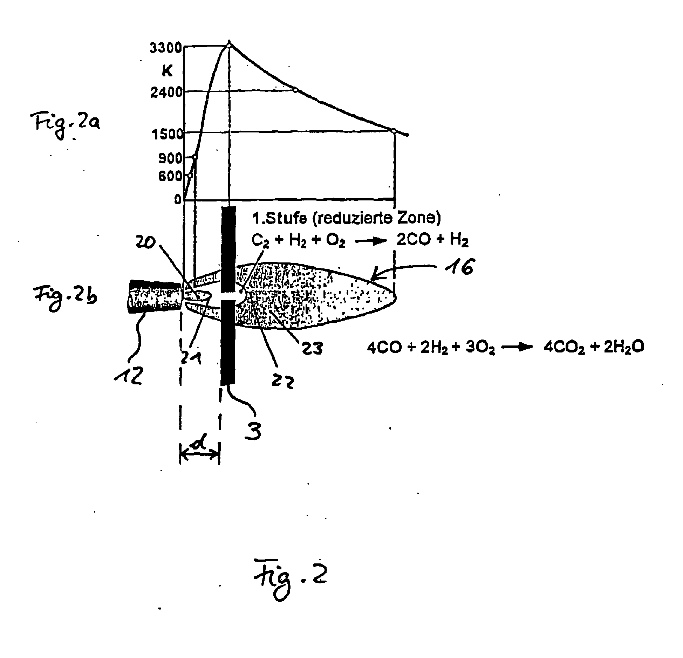

In der Autogentechnik wird üblicherweise ein Gasgemisch aus Sauerstoff und Acetylen (Ethin) verbrannt. Hierbei treten die in der Figur 2 dargestellten chemischen Reaktionen innerhalb der Brennerflamme auf. Neben den chemischen Prozessen tritt zusätzlich eine Ionisierung von Atomen innerhalb der Brennerflamme auf. Vorteilhaft kann gemäß der Erfindung diese Ionisierung berücksichtigt und zur Bestimmung des Abstands genutzt werden. Zur Erfassung der Ionisierung können beispielsweise Elektroden in die Brennerflamme eingeführt werden und die Veränderung eines elektrischen Stromflusses durch die Elektroden in Folge einer Veränderung der Ionisierung bei Veränderung des Abstands der Brennereinrichtung zum Werkstück erfasst werden. Es wurde herausgefunden, dass der Anteil, die Verteilung und Bewegung der Ionen in der Brennerflamme mit dem Abstand der Brennereinrichtung von dem Werkstück zusammenhängt. Vorteilhaft kann durch die Erfassung der Ionisierung mindestens eine der Brennerflamme inhärente elektrische Kenngröße als charakteristische Abstandsgröße f(d) erfasst werden, die zudem relativ einfach einer elektrischen Erfassung zugänglich ist. Das erfasste elektrische Signal kann in einer elektronischen Auswerteeinrichtung weiterverarbeitet werden.

Die signifikante Erfassung einer elektrischen Kenngröße einer autogenen Brennerflamme ist für diese Art der Abstandsbestimmung insofern überraschend, weil die verwendeten Gase ihrer Natur nach Isolatoren sind und an sich - anders als z.B. beim Plasmaschneiden - einen elektrischen Stromfluss nicht erlauben. Grundsätzlich ist zwar bekannt, dass durch das Verbrennen von Gasen innerhalb einer Flamme Ionisationen auftreten. Neu ist jedoch die der vorliegenden Erfindung zu Grunde liegende Erkenntnis, dass während des autogenen Trennens oder Fügens ein gerichteter Ionenfluss sowie eine natürliche elektrische Spannung auftreten, und dass diese Größen zudem charakteristisch für den Abstand zwischen der Brennereinrichtung und dem Werkstück sind. Somit kann eine elektrische Kenngröße einer autogenen Brennerflamme erfasst und zur Abstandsbestimmung verwendet werden. Die Erfindung erlaubt hierdurch eine Erfassung der Abstandsgröße f(d) auf einfache und kompakte Weise. Zudem kann eine hohe Präzision der Erfassung der Abstandsgröße f(d) ermöglicht werden, da die Brennerflamme selbst den Abstandssensor darstellt.

Gemäß der Erfindung wird die sich abstandsabhängig verändernde Ionisierung der Atome innerhalb der Brennerflamme durch Erfassung einer elektrischen Kenngröße an der Brennereinrichtung und/oder zwischen der Brennereinrichtung und dem Werkstück erfasst. Hierdurch ist eine Erfassung der Ionisierung auf messtechnisch einfache Weise möglich. Zudem werden elektrische Signale bestimmt, die einer Weiterverarbeitung in einer elektrischen Auswerteeinrichtung unmittelbar zugänglich sind. Ein weiterer Vorteil besteht darin, dass eine vorhandene Brennereinrichtung ohne größere Modifikationen, insbesondere ohne den Anbau von Sensoren, weiter verwendet werden kann. Zur Adaption einer vorhandenen autogenen Brennereinrichtung für eine Verwendung der Erfindung ist es lediglich erforderlich, die Brennereinrichtung mit einem definierten elektrischen Anschluss zu versehen, z. B. mit einer Steckbuchse am üblicherweise metallischen Gehäuse der Brennereinrichtung. Für den Fall, dass die elektrische Kenngröße nicht zwischen Brennereinrichtung und Werkstück erfasst wird, kann die elektrische Kenngröße zwischen Brennereinrichtung und Erdpotential oder einer Konstantstrom- oder Spannungsquelle erfasst werden.

Als elektrische Kenngröße soll zumindest eine elektrische Spannung zwischen der Brennereinrichtung und dem Werkstück erfasst werden.

Es hat sich gezeigt, dass die Ionisierungseffekte in der autogenen Brennerflamme für eine Abstandsmessung geeignet sind. Die Ionisierung führt zudem zu einer intrinsischen Potentialdifferenz in der Brennerflamme, so dass auch direkt/passiv (ohne zusätzliche elektrische Energiezufuhr) eine elektrische Spannung messbar ist. Zusätzlich ist es möglich, einen durch die Brennerflamme bzw. den Ionenstrom abfließenden elektrischen Strom zu messen. Es hat sich gezeigt, dass alle drei Größen, elektrische Spannung, elektrischer Strom und elektrischer (ohmscher) Widerstand mit dem Abstand zwischen der Brennereinrichtung und dem Werkstück variieren. Ein elektrischer Strom geht dabei den Weg des geringsten Widerstands und fließt bei einem Kontakt zwischen dem Werkstück und der Brennerflamme über das Werkstück ab. Demzufolge ändert sich auch der elektrische Widerstand des teilweise ionisierten Gasgemisches in Abhängigkeit von dem Abstand.

Daher kann vorteilhaft auch eine Erfassung der elektrischen Kenngröße passiv ohne eigene elektrische Energieversorgung erfolgen und es wird kein elektrischer Stromfluss über die Brennerflamme aktiv mit einer geeigneten elektrischen Strom- oder Spannungsquelle durchgeführt. Es ist lediglich eine Messung der Potentialdifferenz zwischen der Brennereinrichtung und dem Werkstück oder Erdpotential oder einem konstanten elektrischen Spannungspotential erforderlich.

Die zu erfassende Abstandsgröße f(d) steht dabei in einem charakteristischen Zusammenhang mit dem Abstand ds zwischen der Brennereinrichtung und dem Werkstück. Der Zusammenhang f(d) <-> ds kann beliebiger Art sein, entscheidend ist, dass eine Zuordnung zwischen dem Abstand ds und der Abstandsgröße f(d) vorgenommen werden kann, z.B. über eine Tabelle oder werkstoffspezifische Kalibrierwerte. Es kann sich bei dem charakteristischen Zusammenhang beispielsweise um eine Relation oder Funktion im mathematischen Sinne handeln. Als Abstand ds wird im Rahmen dieser Anmeldung der Abstand der Spitze der Brennereinrichtung zum Werkstück verstanden. Je nach Definition kann der Abstand ds auch auf andere Teile der Brennereinrichtung bezogen sein.

Es wird gemäß der Erfindung der Abstand zwischen Brennereinrichtung und Werkstück in Abhängigkeit des Anstiegs (dU/dt) oder (dU)/ds) der elektrischen Spannung zeitabhängig oder in Abhängigkeit vom sich verändernden Abstand (ds) zwischen Brennereinrichtung und Werkstück (3) geregelt. Dabei kann bei der Regelung so vorgegangen werden, dass der Abstand zwischen Brennereinrichtung und Werkstück zyklisch so verändert wird, dass zwischen den erfassbaren elektrischen Spannungsmaxima geregelt wird.

Bei der Erfassung mindestens einer der genannten elektrischen Kenngrößen kann der Abstand zwischen Brennereinrichtung und Werkstück bei der Regelung des Abstandes verändert und die Erfassung des mindestens einen lokalen Maximums und/oder Minimums der elektrischen Spannung dabei zyklisch durchgeführt werden. Die Bewegung kann hierfür translatorisch zwischen zwei Umkehrpunkten durchgeführt werden. Diese Messung kann mehrfach pro Sekunde durchgeführt werden, so dass eine Erfassung quasi ständig durchgeführt werden kann. Dadurch wird der Abstand bei jeder dieser Messungen neu ermittelt und kann für eine ständige Regelung des Abstandes genutzt werden. So können auch lokale Oberflächenveränderungen (Verschmutzungen, Farbe, Rost oder Oberflächengeometrieänderungen) der oder an der Werkstückoberfläche erkannt und berücksichtigt werden.

Bei der Erfindung besteht auch die Möglichkeit, mittels der erfassten Anstiege der elektrischen Spannung auftretende Betriebsfehler, wie z.B. das Erlöschen der Brennerflamme oder ein Überschreiten einer Werkstückaußenkante, zu erkennen.

Es besteht außerdem die Möglichkeit, nach Durchführung einer Vorwärmphase vor dem Beginn des authogenen Schneidens die Zuschaltung des Schneidsauerstoffs mittels mindestens einer erfassten elektrischen Kenngröße zu steuern.

Gemäß einer vorteilhaften Weiterbildung der Erfindung erfolgt abhängig von der Abstandsgröße eine Abstandsregelung zwischen der Brennereinrichtung und dem Werkstück. Hierdurch kann eine unerwünschte Veränderung des Abstands durch Oberflächenunregelmäßigkeiten des Werkstücks automatisch ausgeregelt werden. Die Brennerflamme kann immer im Bereich ihrer besten Wirksamkeit, nämlich der höchsten Temperatur in Bezug auf das Werkstück gehalten werden. Zudem werden mögliche Kollisionen des Werkstücks mit der Brennereinrichtung bzw. mit Abstandssensoren, wie sie aus dem Stand der Technik bekannt sind, vermieden. In Folge dessen ist eine höhere Präzision beim Trennen und Fügen von Werkstücken möglich. Zudem können höhere Vorschubgeschwindigkeiten und damit Schneide- bzw. Fügegeschwindigkeiten realisiert werden.

Gemäß einer vorteilhaften Weiterbildung der Erfindung wird eine Durchflussmessung zur Bestimmung der Durchflussmenge des durch wenigstens eine der Gaszufuhrleitungen der Brennereinrichtung strömenden Gases durchgeführt. Einer autogenen Brennereinrichtung werden üblicherweise zwei Gase zugeführt, nämlich Sauerstoff und Acetylen. Sauerstoff und Acetylen werden in der Brennereinrichtung einerseits zu einem Heizgas gemischt. Zusätzlich wird aus der Brennereinrichtung der Sauerstoff aus einer separaten Düse als Schneidsauerstoff herausgeführt. Eine Durchflussmessung des in die Brennereinrichtung einströmenden Sauerstoffs und/oder Acetylens ist hilfreich für eine automatische Flamm- oder Schneidregelung. Insbesondere kann automatisch die Größe der Flamme eingestellt werden.

In einer vorteilhaften Weiterbildung der Erfindung erfolgt die Abstandsregelung zwischen der Brennereinrichtung und dem Werkstück zusätzlich in Abhängigkeit der ermittelten Durchflussmenge mindestens eines Gases. Hierdurch kann die Abstandsregelung automatisch die jeweilige Größe der Flamme berücksichtigen und eine Abstandseinstellung auf den jeweils besten Arbeitspunkt vornehmen.

Allein oder zusätzlich zu dieser Durchflussmessung kann eine Werkstofftemperaturbestimmung im Bereich der von der Brennerflamme beeinflusst wird, durchgeführt und die erfasste Temperatur bei der Regelung des Abstandes zwischen der Brennereinrichtung und dem Werkstück berücksichtigt werden. Hierfür kann vorteilhaft ein berührungsloser Temperatursensor, wie z.B. ein Pyrometer eingesetzt werden.

Gemäß einer vorteilhaften Weiterbildung der Erfindung wird der Abstand zwischen der Brennereinrichtung und dem Werkstück derart eingestellt, dass das Temperaturmaximum der Brennerflamme im Bereich des Werkstücks liegt. Hierdurch wird ein höchst möglicher Wirkungsgrad der Brennereinrichtung beim Trennen oder Fügen von Werkstücken ermöglicht. Dabei ist nicht zwangsläufig eine Abstandseinstellung exakt auf den Maximalpunkt der Temperaturkurve erforderlich, sondern zumindest eine Einstellung in den diesen Punkt umgebenden Bereich, wobei in der Praxis Abweichungen von wenigen Millimetern durchaus tolerabel sind.

Gemäß der Erfindung weist eine autogene Brennereinrichtung einen elektrischen Anschluss an der Brennereinrichtung zur Erfassung einer elektrischen Kenngröße an der Brennereinrichtung und/oder zwischen der Brennereinrichtung und einem Werkstück auf. Der elektrische Anschluss kann beispielsweise als Steckanschluss oder als Schraubanschluss ausgeführt sein. Es hat sich gezeigt, dass die Verwendung eines definierten elektrischen Anschlusses vorteilhaft für die Verwendung der Brennerflamme als Abstandssensor ist. Im Vergleich zu einer undefiniert an die Brennereinrichtung angeklemmten elektrischen Leitung hat ein elektrischer Anschluss an der Brennereinrichtung den Vorteil, dass ein reproduzierbarer, relativ kleiner Übergangswiderstand vorliegt, der in der Praxis bei entsprechender Ausführung des elektrischen Anschlusses vernachlässigbar ist. Der elektrische Anschluss an der Brennereinrichtung erlaubt damit reproduzierbare Bestimmungen der Abstandsgröße durch Auswertung der Eigenschaft der Brennerflamme, auch wenn die elektrische Kontaktierung der Brennereinrichtung zeitweise gelöst und zu einem anderen Zeitpunkt wieder verbunden wird. Insgesamt erlaubt die Verwendung eines elektrischen Anschlusses an der Brennereinrichtung eine größere Flexibilität der Verwendung der Brennereinrichtung in Verbindung mit der erfindungsgemäßen Verwendung der Brennerflamme als Abstandssensor.

Vorteilhaft ist der elektrische Anschluss elektrisch leitend mit der Brennerdüse der Brennereinrichtung verbunden. Bei handelsüblichen, manuellen Schweißbrennern kann der elektrische Anschluss beispielsweise als Steckkontakt am metallischen Gehäuse der Brennereinrichtung angeordnet werden. Das Gehäuse ist dann vorteilhaft bis zur Brennerdüse als elektrisch leitendes Metallteil, z. B. als Messingteil, ausgebildet. Bei Verwendung von Metallgewebeschlauch zur Zuführung der Gase zu der Brennereinrichtung kann vorteilhaft der elektrische Anschluss auch an einem der Schläuche angeordnet sein, wobei ein Kontakt des Metallgewebes sowohl zu dem elektrischen Anschluss als auch zu dem Metallgehäuse der Brennereinrichtung herzustellen ist.

Eine Kalibrierung kann so durchgeführt werden, indem eine Kalibriermessung durchgeführt wird, bei der die Brennerflamme mindestens einmal bei bekanntem Abstand zwischen Brennereinrichtung und Werkstück auf eine temperierte Probe gerichtet und mindestens eine der elektrischen Größen erfasst und einer elektronischen Steuer- und Regeleinheit übermittelt wird.

Für eine Regelung des Abstandes zwischen Brennereinrichtung und Werkstück und/oder eine Kalibrierung für verschiedene Werkstoffe können spezifische Messwertverläufe für mindesten eine elektrische Kenngröße in einer Wissensbasis oder einem elektronischen Speicher hinterlegt werden. Diese können dann mit mindestens einer erfassten elektrischen Größe verglichen und bei der Regelung des Abstandes berücksichtigt werden.

Bei der Erfindung kann eine Einrichtung mit einer autogenen Brennereinrichtung und einer Erfassungseinrichtung zur Erfassung einer Abstandsgröße, wobei die Einrichtung zur Ausführung eines der vorgenannten Verfahren eingerichtet ist, eingesetzt werden. Die Erfassungseinrichtung kann beispielsweise mit einem programmierbaren Mikroprozessor versehen sein. Der Mikroprozessor weist vorteilhaft eine Auswertesoftware auf, die zur Ausführung der Verfahrensschritte eingerichtet ist. Ferner kann eine Einrichtung, bei der eine Abstandsregeleinrichtung vorgesehen sein, die zur Regelung des Abstands zwischen der Brennereinrichtung und dem Werkstück eingerichtet ist. Die Abstandsregeleinrichtung gibt dann Stellsignale zur Einstellung des Abstands an einen Abstandssteller, der als mechanischer Aktuator ausgebildet ist und zur Einstellung des Abstands zwischen der autogenen Brennereinrichtung und dem Werkstück dient.

Die Erfindung wird nachfolgend anhand von Ausführungsbeispielen unter Verwendung von Zeichnungen näher erläutert.

Es zeigen
- Figur 1:: den grundsätzlichen Aufbau einer autogenen Brennereinrichtung,
- Figur 2:: eine Brennerflamme in Bezug zu der Flammen- temperaturkurve,
- Figur 3:: einen Verlauf der Abstandsgröße über den Abstand und
- Figur 4:: eine abstandsgeregelte autogene Brennereinrichtung.

In den Figuren werden gleiche Bezugszeichen für einander entsprechende Elemente verwendet.

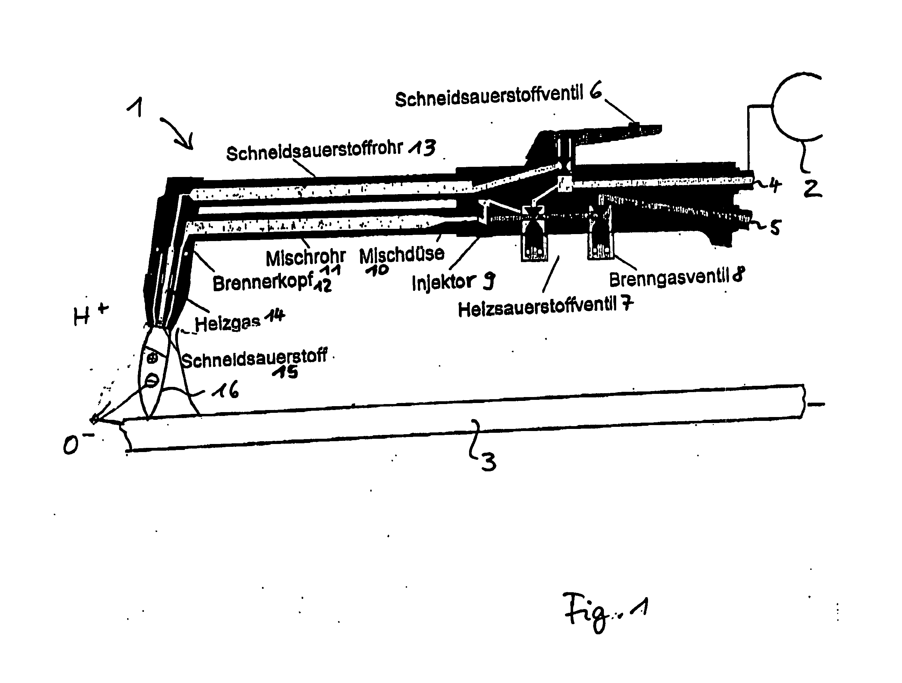

Die Figur 1 zeigt als Beispiel für eine autogene Brennereinrichtung 1 einen manuell zu verwendenden Schweißbrenner bzw. Schneidbrenner 1 für das autogene Trennen oder Fügen (nachfolgend kurz Brenner genannt). Die Brennereinrichtung 1 weist einen elektrischen Anschluss 2 auf, über den eine Einrichtung zur Erfassung einer elektrischen Kenngröße zur Bestimmung der Abstandsgröße angeschlossen werden kann. Der elektrische Anschluss ist beispielsweise als Steckverbinder ausgebildet, an den ein Voltmeter oder ein Ohmmeter angeschlossen werden kann.

Die Brennereinrichtung 1 weist ferner einen Schlauchanschluss 4 zum Anschluss eines Versorgungsschlauchs für Sauerstoff und einen Schlauchanschluss 5 zum Anschluss eines Versorgungsschlauchs für Acetylen auf. Der über den Anschluss 4 zugeführte Sauerstoff wird über einen Kanal einerseits einem manuell einstellbaren Heizsauerstoffventil 7 und andererseits einem manuell betätigbaren Schneidsauerstoffventil 6 zugeführt. Das Schneidsauerstoffventil 6 führt ausgangsseitig zu einem Schneidsauerstoffrohr 13, über das Schneidsauerstoff zu einem Schneidsauerstoffauslass 15 an einem Brennerkopf 12 der Brennereinrichtung 1 geführt wird. Das Acetylen wird von dem Schlauchanschluss 5 über einen Kanal zu einem Brenngasventil 8 geführt, das ebenfalls manuell einstellbar ist. Das Brenngasventil 8 und das Heizsauerstoffventil 7 sind ausgangsseitig über jeweilige Kanäle mit einem Injektor 9 verbunden, der wiederum mit einer Mischdüse 10 in Verbindung steht. In der Mischdüse 10 werden die Gase (Sauerstoff und Acetylen) miteinander gemischt. Das gemischte Gas, auch als Heizgas bezeichnet, wird über ein Mischrohr 11 zu einem Heizgasauslass 14 in den Brennerkopf 12 geführt. Die aus dem Brennerkopf 12 austretenden Gase werden entzündet und bilden eine Flamme 16, mit der ein Werkstück 3 bearbeitet werden kann.

Der in der Figur 1 dargestellte manuell zu verwendende Brenner der Brennereinrichtung 1 ist lediglich exemplarisch für jede Art von autogener Brennereinrichtung 1 dargestellt. Die Erfindung ist vorteilhaft sowohl für manuelle Brenner als auch für maschinenimplementierte Brenner, z. B. bei CNC-gesteuerten Schneidbrennmaschinen, einsetzbar.

In der Figur 2 ist die Brennerflamme 16 (Figur 2b) in Bezug zu einer Flammen-Temperaturkurve (Figur 2a) dargestellt. Weiterhin ist der Abstand ds zwischen der Spitze des Brennerkopfes 12 und dem Werkstück 3 dargestellt. Im in der Figur 2 dargestellten Beispiel wurde der Brenner 1 auf eine neutrale Flammeneinstellung eingestellt. Wie erkennbar ist, gliedert sich die Brennerflamme 16 ausgehend von dem Brennerkopf 12 in eine erste innere Sektion 20, an die sich eine zwischen den Punkten 21, 22 liegende mittlere Sektion hoher Brenntemperaturen anschließt, und in eine sich daran anschließende äußere Sektion 23. Der beste Wirkungsgrad beim autogenen Trennen und Fügen wird erreicht, wenn das Werkstück 3 soweit von der Spitze des Brennerkopfes 12 entfernt ist, dass das Werkstück im Bereich der mittleren Sektion der Brennerflamme 16 liegt. In diesem Bereich werden die höchsten Temperaturen erreicht, so dass die größtmögliche Arbeitsgeschwindigkeit erzielt werden kann.

Die Figur 2 gibt zudem die in der Brennerflamme 16 ablaufenden chemischen Reaktionen bei der Verbrennung von Acetylengas wieder. Wie erkennbar ist, ist den chemischen Gleichungen aber nicht zu entnehmen, dass bei der Verbrennung eine Ionisierung von Atomen innerhalb der Brennerflamme 16 eintritt. Grundsätzlich sind die verwendeten Gase nämlich naturgemäß Isolatoren. Die durch die Ionisierung entstehenden Ionen sind ihrer Natur nach entweder negativ oder positiv geladen. Die negativ geladenen Ionen stehen z. B. im Falle einer Widerstandsmessung bei Anlegung eines Spannungspotentials für einen Stromfluss zur Verfügung. Somit kann die autogene Brennerflamme 16 verwendet werden, einen elektrischen Strom zu leiten. Die Konsequenz daraus ist, dass die Brennerflamme 16 bedingt durch die Dimension des Ionenstroms über einen elektrischen Widerstand verfügt, der abhängig von seiner Größe differiert. Der elektrische Strom geht bekanntlich den Weg des geringsten Widerstands. Bei einem Werkstückkontakt der Brennerflamme 16 wird ein Teil dieses elektrischen Stroms dem Ionenstrom folgend über das Werkstück 3 abfließen. Hierdurch ergibt sich ein Zusammenhang zwischen elektrischen Kenngrößen der Brennerflamme 16 und dem Abstand d.

Zur Bestimmung der Abstandsgröße erfolgt eine elektrische Spannungsmessung erfolgen. Bei der Spannungsmessung ist ein Voltmeter einerseits an den elektrischen Anschluss 2 des Brenners 1 und andererseits an das Werkstück 3 anzuschließen. Es wird somit die Potentialdifferenz zwischen dem Brenner 1 und dem Werkstück 3 gemessen. An Stelle eines Anschlusses an das jeweilige Werkstück 3 kann beispielsweise auch ein Anschluss an einen Schneidtisch, auf dem Werkstücke bearbeitet werden sollen, erfolgen. Der Schneidtisch ist dabei üblicherweise auf Erdpotential gelegt.

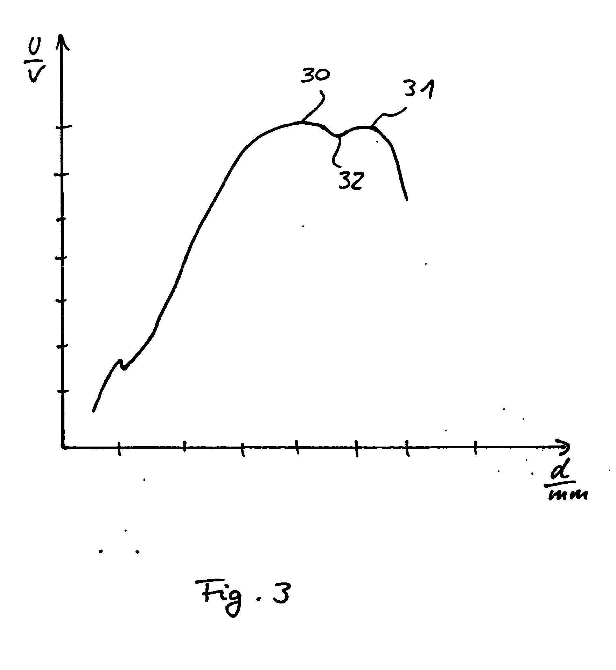

In der Figur 3 ist erfindungsgemäß das Ergebnis einer solchen elektrischen Spannungsmessung dargestellt. Erkennbar ist der Verlauf der gemessenen elektrischen Spannung u über den Abstand ds, der im Verlaufe der Messung variiert wurde. Das Messergebnis gemäß Figur 3 wurde durch Ermittlung einer Mehrzahl von Messwerten für jeden Abstandswert ds erzielt, um statistische Schwankungen auszugleichen. Die gemessene Spannung u hat typischerweise einen Hub von einigen Volt über den Variationsbereich des Abstands ds. Wie erkennbar ist, ergibt sich eine charakteristische Abhängigkeit der gemessenen elektrischen Spannung u zu dem Abstand d. Aus der erfassten elektrischen Spannung u kann somit die Abstandsgröße f(d) oder der Abstand ds direkt bestimmt werden. Im einfachsten Fall kann direkt der Wert der Spannung u als Abstandsgröße f(d) verwendet werden.

Aus der Figur 3 ist erkennbar, dass der Verlauf der Spannung u über den Abstand ds ein erstes Maximum 30 und ein zweites Maximum 31 aufweist. Zwischen den Maxima 30, 31 befindet sich ein lokales Minimum 32. Versuche haben ergeben, dass ein besonders effizientes autogenes Trennen oder Fügen möglich ist, wenn der Abstand ds derart eingestellt wird, dass gerade das Minimum 32 der elektrischen Spannungskurve erreicht wird. Ein Verfahren zur Abstandsregelung einer autogenen Brennereinrichtung 1 umfasst gemäß der Erfindung daher die Erfassung der Spannung u als Potentialdifferenz zwischen der Brennereinrichtung 1 und dem Werkstück 3 oder einem anderen bekannte Spannungspotential, die Erkennung des Minimums 32 der Spannungskurve sowie eine automatische Einstellung und Regelung des Abstands ds derart, dass bei dem geregelten Abstand ds die gemessene Spannung u möglichst nahe dem lokalen Minimum 32 liegt.

Die jeweiligen elektrischen Spannungswerte unterscheiden sich bei den verschiedenen Werkstückwerkstoffen. Es treten aber die genannten elektrischen Spannungsmaxima und -minima bei fast allen Werkstoffen auf, was bei Versuchen an unterschiedlichen Stählen oder anderen Werkstofflegierungen, wie z.B. bei Cu, C45, S355, Messing, Bronze, Edelstählen und Aluminium nachgewiesen werden konnte. Dabei konnten für St 60 ein elektrisches Spannungsmaximum 30 von ca. 2 V und ein Minimum 32 von ca. 0,4 V ermittelt werden.

Beispielhaft seien noch die folgenden Werkstoffe genannt: Unlegierte Stähle, niedrig legierte Stähle, Titan, Aluminium, hochlegierte Stähle, Grauguss, Kupfer.

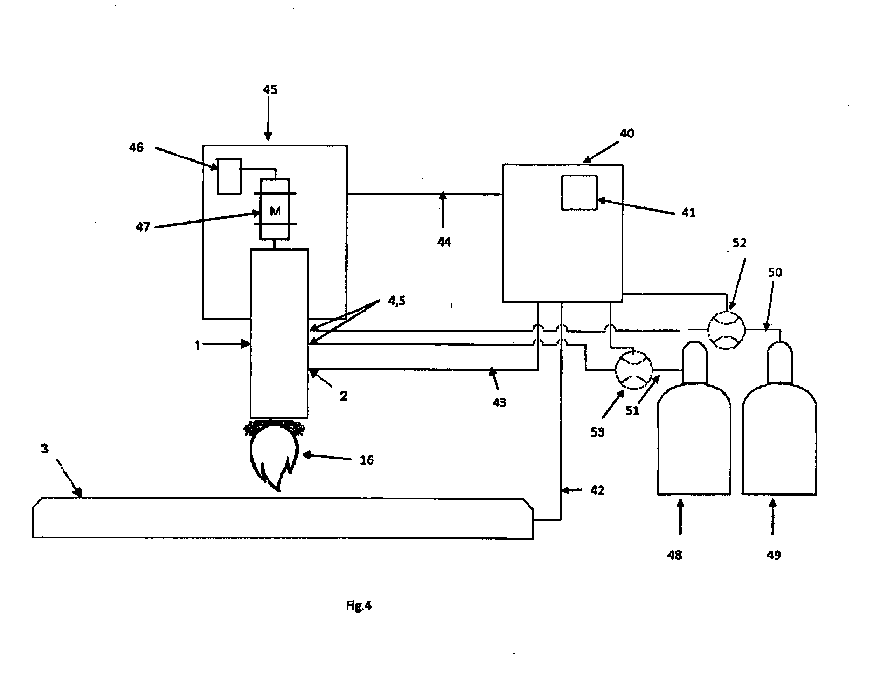

Die Figur 4 zeigt eine Anwendung der Erfindung in einer autogenen Brennereinrichtung, die computergesteuert (CNC) ist. Die Einrichtung gemäß Figur 4 weist zunächst die autogene Brennereinrichtung 1 an sich auf. Die autogene Brennereinrichtung 1 verfügt über den bereits erwähnten elektrischen Anschluss 2 sowie die Schlauchanschlüsse 4, 5. Die autogene Brennereinrichtung 1 ist mit einer computergesteuerten Abstandsregeleinrichtung 45 verbunden. Die Abstandsregeleinrichtung 45 weist einen Steuerungs-Mikroprozessor 46 und einen Abstandssteller 47 auf. Der Abstandssteller 47 kann beispielsweise als Elektromotor ausgebildet sein, der über eine Spindel die autogene Brennereinrichtung 1 verstellen kann. Der Mikroprozessor 46 steuert dabei den Abstandssteller 47.

Ferner ist eine Erfassungseinrichtung 40 zur Erfassung einer Abstandsgröße f(d) vorgesehen. Die Erfassungseinrichtung 40 weist einen eigenen Mikroprozessor 41 auf, der eingehende Daten erfasst, verarbeitet und entsprechend ausgibt. Die Erfassungseinrichtung 40 ist über eine erste elektrische Leitung 43 mit dem elektrischen Anschluss 2 der Brennereinrichtung 1 verbunden. Über eine zweite elektrische Leitung 42 ist die Erfassungseinrichtung 40 mit dem Werkstück 3 elektrisch verbunden. Die Erfassungseinrichtung 40 erfasst die Potentialdifferenz zwischen den elektrischen Leitungen 42, 43, bestimmt daraus die Abstandsgröße f(d) und überträgt die Abstandsgröße über eine Leitung 44 zu dem Mikroprozessor 46 der Abstandsregeleinrichtung 45.

Die Schlauchanschlüsse 4, 5 der Brennereinrichtung 1 sind über Schläuche 50, 51 mit Gas-Vorratsbehältern 48, 49 verbunden. Die Schläuche 50, 51 sind über einen jeweiligen Durchflussmesser 52, 53 zu den Schlauchanschlüssen 4, 5 geführt. Die Durchflussmesser 52, 53 dienen der Erfassung der jeweiligen durch den Schlauch 50 bzw. 51 durchfließenden Gasmenge. Die Durchflussmesser 52, 53 können beispielsweise als Flügelradzähler ausgebildet sein. Die Durchflussmesser 52, 53 sind über elektrische Leitungen mit dem Mikroprozessor 46 der Abstandsregeleinrichtung 45 verbunden. Hierüber erhält der Mikroprozessor 46 Informationen über die Gas-Durchflussmengen durch die Schläuche 50, 51.

Der Mikroprozessor 46 wertet die empfangenen Daten, d. h. die Abstandsgröße und die Durchflussmengen, aus und stellt hiervon ausgehend den Abstand ds der Brennereinrichtung 1 von dem Werkstück 3 vorteilhaft derart ein, dass die Flamme 16 mit ihrer mittleren Sektion (zwischen den Punkten 21 und 22) auf das Werkstück 3 trifft. Die Abstandsregeleinrichtung 45 sorgt auf diese Weise für einen hohen Wirkungsgrad beim autogenen Trennen und Fügen und ermöglicht somit eine hohe Vorschubgeschwindigkeit der Brennereinrichtung gegenüber dem Werkstück 3.

Eine weitere Anwendung der mit dem erfindungsgemäßen Verfahren gewonnenen Werte der Abstandsgröße f(d) bzw. des Abstands ds besteht darin, dass die Werte aufgezeichnet werden und für eine Qualitätsdokumentation beim manuellen Schweißen verwendet werden.

Durch die beschriebene Abstandsregelung ist eine automatische Nahtverfolgung (z. B. im Schiffsbau) bei großen Werkstücktoleranzen möglich. Z. B. könnten relativ lange Bleche, die im Schiffsbau in Werften verarbeitet werden, und die bedingt durch nicht optimale Wärmebehandlung in der Regel uneben ausfallen, mit der Erfindung bearbeitet werden. Die Bleche können im Prinzip beliebig lang sein, wobei Blechlängen von 2 bis 20 m keine Seltenheit sind. Vorteilhaft kann dabei eine Kollision eines Abstandssensors mit dem Werkstück, bedingt durch die Unebenheiten, vermieden werden.

## Patentansprüche

1. Verfahren zur Bestimmung des Abstands (ds) zwischen einer autogenen Brennereinrichtung (1) und einem Werkstück (3), bei dem bei Berücksichtigung der abstandsabhängigen Ionisierung innerhalb der Brennerflamme (16) zumindest die elektrische Spannung (U) an der Brennereinrichtung (1) oder zwischen der Brennereiririchtung (1) und dem Werkstück (3) passiv ohne eine eigene elektrische Energieversorgung erfasst wird,
**dadurch gekennzeichnet, dass**
der Abstand (ds) zwischen Brennereinrichtung (1) und Werkstück (3) auf einen Abstand so geregelt wird, dass bei diesem Abstand (ds) eine elektrische Spannung im Bereich eines elektrischen Spannungsminimums (32) zwischen zwei elektrischen Spannungsmaxima (30, 31) erfasst worden ist
und/oder
der Abstand (ds) zwischen Brennereinrichtung (1) und Werkstück (3) in Abhängigkeit des Anstiegs (dU/dt) oder (dU)/ds) der elektrischen Spannung zeitabhängig oder in Abhängigkeit vom sich verändernden Abstand (ds) zwischen Brennereinrichtung (1) und Werkstück (3) geregelt wird..

2. Verfahren nach Anspruch 1, **dadurch gekennzeichnet, dass** der Abstand (ds) zwischen Brennereinrichtung (1) und Werkstück (3) bei der Regelung des Abstandes durch translatorische Bewegung zwischen zwei Umkehrpunten zyklisch verändert und die Erfassung des mindestens einen lokalen Maximums und/oder Minimums der elektrischen Spannung und/oder des Anstiegs (dU/dt) oder (dU)/ds) der elektrischen Spannung dabei zyklisch durchgeführt wird/werden.

3. Verfahren nach einem der vorhergehenden Ansprüche, **dadurch gekennzeichnet, dass** die Abstandsbestimmung für den jeweiligen Werkstückwerkstoff spezifisch durchgeführt wird.

4. Verfahren nach einem der vorhergehenden Ansprüche, **dadurch gekennzeichnet, dass** mit den an der Brennereinrichtung (1) oder zwischen der Brennereinrichtung (1) und dem Werkstück (3) erfassten elektrischen Messwerten für die elektrische Spannung (u), den elektrischen Strom (i) und/oder den elektrischen Widerstand (r) nach Durchführung einer Vorwärmphase vor dem Beginn des autogenen Schneidens die Zuschaltung des Schneidsauerstoffs gesteuert wird.

5. Verfahren nach einem der vorhergehenden Ansprüche, **dadurch gekennzeichnet, dass** eine Durchflussmessung zur Bestimmung der Durchflussmenge mindestens eines durch mindestens eine Gaszufuhrleitung (4, 5, 50, 51) durch die Brennereinrichtung (1)strömenden Gases durchgeführt und bei der Regelung des Abstandes (ds) zwischen der Brennereinrichtung (1) und dem Werkstück (3) berücksichtigt wird.

6. Verfahren nach einem der vorhergehenden Ansprüche, **dadurch gekennzeichnet, dass** die Werkstücktemperatur, im Bereich der von der Brennerflamme (16) beeinflusst wird, bestimmt und bei der Regelung des Abstandes (ds) zwischen der Brennereinrichtung (1) und dem Werkstück (3) berücksichtigt wird.

7. Verfahren nach einem der vorhergehenden Ansprüche, **dadurch gekennzeichnet, dass** der Abstand (ds) zwischen Brennereinrichtung (1) und Werkstück (3) so geregelt wird, dass das Temperaturmaximum der Brennerflamme (16) im Bereich des Werkstücks (3) angeordnet ist.

8. Verfahren nach einem der vorhergehenden Ansprüche, **dadurch gekennzeichnet, dass** eine Kalibrierung durchgeführt wird, indem eine Kalibriermessung durchgeführt wird, bei der die Brennerflamme (16) mindestens einmal bei bekanntem Abstand (ds) zwischen Brennereinrichtung (1) und Werkstück (3) auf eine temperierte Probe gerichtet und mindestens eine der elektrischen Größen erfasst und einer elektronischen Steuer- und Regeleinheit übermittelt wird.

9. Verfahren nach einem der vorhergehenden Ansprüche, **dadurch gekennzeichnet, dass** für eine Regelung des Abstandes (ds) zwischen Brennereinrichtung (1) und Werkstück (3) und/oder eine Kalibrierung für verschiedene Werkstoffe spezifische Messwertverläufe in einer Wissensbasis oder einem elektronischen Speicher hinterlegt sind, die mit mindestens einer erfassten elektrischen Größe verglichen und bei der Regelung des Abstandes berücksichtigt werden.

## Claims

1. A method for determining the distance (ds) between an autogenous burner means (1) and a workpiece (3), in which, taking into account the distance-dependent ionisation within the burner flame (16), at least the electric voltage (U) at the burner means (1) or between the burner means (1) and the workpiece (3) is detected passively without an own electrical power supply,
**characterised in that**
the distance (ds) between the burner means (1) and the workpiece (3) is regulated to a distance such that at this distance (ds) an electric voltage in the region of an electric voltage minimum (32) between two electric voltage maxima (30, 31) has been detected, and/or
the distance (ds) between the burner means (1) and the workpiece (3) is regulated, as a function of the increase (dU/dt) or (dU)/ds) in the electric voltage, in time-dependent manner or dependent on the changing distance (ds) between the burner means (1) and the workpiece (3).

2. A method according to Claim 1, **characterised in that** the distance (ds) between the burner means (1) and the workpiece (3) upon the regulation of the distance by translatory movement between two reversal points is changed cyclically and the detection of the at least one local maximum and/or minimum of the electric voltage and/or of the increase (dU/dt) or (dU)/ds) in the electric voltage in such case is/ate carried out cyclically.

3. A method according to one of the preceding claims, **characterised in that** the determination of distance is carried out specifically for the respective workpiece material.

4. A method according to one of the preceding claims, **characterised in that** the switching-on of the cutting oxygen is controlled with the electrical measured values, detected at the burner means (1) or between the burner means (1) and the workpiece (3), for the electric voltage (u), the electric current (i) and/or the electrical resistance (r) after carrying out a pre-heating phase before the start of the autogenous cutting.

5. A method according to one of the preceding claims, **characterised in that** a throughflow measurement for determining the flow rate of at least one gas flowing through at least one gas supply line (4, 5, 50, 51) through the burner means (1) is carried out and is taken into account in the regulation of the distance (ds) between the burner means (1) and the workpiece (3).

6. A method according to one of the preceding claims, **characterised in that** the workpiece temperature, in the region which is influenced by the burner flame (16), is determined and is taken into account in the regulation of the distance (ds) between the burner means (1) and the workpiece (3).

7. A method according to one of the preceding claims, **characterised in that** the distance (ds) between the burner means (1) and the workpiece (3) is regulated such that the temperature maximum of the burner flame (16) is located in the region of the workpiece (3).

8. A method according to one of the preceding claims, **characterised in that** a calibration is carried out by performing a calibration measurement in which the burner flame (16) is directed at least once, at a known distance (ds) between the burner means (1) and workpiece (3), onto a temperature-controlled sample and at least one of the electrical variables is detected and is transmitted to an electronic control and regulation unit.

9. A method according to one of the preceding claims, **characterised in that** for regulation of the distance (ds) between the burner means (1) and the workpiece (3) and/or calibration for different materials specific measured-value curves are filed in a knowledge base or an electronic store, said curves being compared with at least one detected electrical variable and being taken into account in the regulation of the distance.

## Revendications

1. Procédé pour déterminer la distance (ds) entre un dispositif de brûleur autogène (1) et une pièce à usiner (3), dans lequel en tenant compte de l'ionisation dépendant de la distance à l'intérieur de la flamme du brûleur (16), au moins la tension électrique (U) est détectée passivement, sans alimentation électrique propre, au niveau du dispositif de brûleur (1) ou entre le dispositif de brûleur (1) et la pièce à usiner (3),
**caractérisé en ce que**
la distance (ds) entre le dispositif de brûleur (1) et la pièce à usiner (3) est réglée à une distance de sorte qu'à cette distance (ds), une tension électrique a été détectée dans la zone d'un minimum de tension électrique (32) entre deux maxima de tensions électriques (30, 31), et/ou
**en ce que** la distance (ds) entre le dispositif de brûleur (1) et la pièce à usiner (3) est réglée en fonction de l'augmentation (dU/dt) ou (dU)/ds) de la tension électrique en fonction du temps ou en fonction de la distance (ds) qui varie entre le dispositif de brûleur (1) et la pièce à usiner (3).

2. Procédé selon la revendication 1, **caractérisé en ce que** la distance (ds) entre le dispositif de brûleur (1) et la pièce à usiner (3) est modifiée cycliquement, lors du réglage de la distance, par un mouvement de translation entre deux points de rebroussement, et dans ce cas, la détection de l'au moins un maximum et/ou minimum local de la tension électrique et/ou de l'augmentation (dU/dt) ou (dU)/ds) de la tension électrique est réalisée cycliquement.

3. Procédé selon l'une quelconque des revendications précédentes, **caractérisé en ce que** la détermination de la distance est réalisée spécifiquement pour le matériau de la pièce à usiner respectif.

4. Procédé selon l'une quelconque des revendications précédentes, **caractérisé en ce que** la mise en circuit de l'oxygène de coupe est commandée avec les valeurs de mesure électriques détectées au niveau du dispositif de brûleur (1) ou entre le dispositif de brûleur (1) et la pièce à usiner (3) pour la tension électrique (u), le courant électrique (i) et/ou la résistance électrique (r) après la réalisation d'une phase de préchauffage avant le début de la coupe autogène.

5. Procédé selon l'une quelconque des revendications précédentes, **caractérisé en ce qu'**une mesure du débit est réalisée pour déterminer le débit d'au moins un gaz circulant à travers au moins une conduite d'amenée de gaz (4, 5, 50, 51) à travers le dispositif de brûleur (1) et prise en considération lors du réglage de la distance (ds) entre le dispositif de brûleur (1) et la pièce à usiner (3).

6. Procédé selon l'une quelconque des revendications précédentes, **caractérisé en ce que** la température de la pièce à usiner, dans la zone qui est influencée par la flamme du brûleur (16), est déterminée et prise en considération lors du réglage de la distance (ds) entre le dispositif de brûleur (1) et la pièce à usiner (3).

7. Procédé selon l'une quelconque des revendications précédentes, **caractérisé en ce que** la distance (ds) entre le dispositif de brûleur (1) et la pièce à usiner (3) est réglée de sorte que le maximum de température de la flamme du brûleur (16) se situe dans la zone de la pièce à usiner (3).

8. Procédé selon l'une quelconque des revendications précédentes, **caractérisé en ce qu'**un calibrage est réalisé, **en ce qu'**une mesure de calibrage est réalisée, dans laquelle la flamme du brûleur (16) est orientée au moins une fois vers une pièce d'essai tempérée à une distance (ds) connue entre le dispositif de brûleur (1) et la pièce à usiner (3) et au moins une des grandeurs électriques est détectée et transmise à une unité de commande et de réglage électronique.

9. Procédé selon l'une quelconque des revendications précédentes, **caractérisé en ce que** pour un réglage de la distance (ds) entre le dispositif de brûleur (1) et la pièce à usiner (3) et/ou pour un calibrage, des tracés des valeurs mesurées spécifiques pour différents matériaux sont enregistrées dans une base de connaissances ou dans une mémoire électronique, qui sont comparées à au moins une grandeur électrique détectée et prises en considération lors du réglage de la distance.
